# EUROPÄISCHE PATENTSCHRIFT

(11) **EP 0 381 762 B1**
(45) Veröffentlichungstag und Bekanntmachung des Hinweises auf die Patenterteilung: **15.12.1993**
(21) Anmeldenummer: 89906488.5
(22) Anmeldetag: 11.04.1989
(51) Int. Cl.: A01J 7/00

(54) **SELBSTTÄTIGER MILCHZÄHLER FÜR EINE MELKANLAGE**
AUTOMATIC MILK COUNTER FOR MILKING INSTALLATION
COMPTEUR DE LAIT AUTOMATIQUE POUR INSTALLATION DE TRAITE

(30) Priorität: 05.05.1988 SU 4413032
(43) Veröffentlichungstag der Anmeldung: 16.08.1990
(73) Patentinhaber: LATVIISKAYA SELSKOKHOZYAISTVENNAYA AKADEMIA, Latviiskaya SSR, 229600 (SU)
(72) Erfinder: MOSKVIN, Gennady Alexeevich, Latviiskaya SSR, 229601 (SU)
(74) Vertreter: Patentanwälte Zellentin & Partner
(86) Internationale Anmeldenummer: SU8900089
(87) Internationale Veröffentlichungsnummer: WO8910686

(56) Entgegenhaltungen:
- EP-A- 0 041 120
- EP-A- 0 146 630
- FR-A- 2 406 812
- SU-A- 1 175 403
- SU-A- 1 358 857
- SU-A- 1 410 920
- LANDTECHNIK. vol. 37, no. 4, April 1982, HANNOVER DE Seiten 188 - 190; D.Ordolff: "Technische Lösungen zur Milchmengenmessung"

## Beschreibung

### Gebiet der Technik

Die vorliegende Erfindung betrifft Einrichtungen zur Bestimmung der durch einen Melkapparat bei einer Kuh gemolkenen Milchmenge und bezieht sich insbesonder auf einen automatischen Milchzähler eines Melkapparates.

### Stand der Technik

Zur zielgerichteten Steuerung der Milchproduktion in Viehfarmen und -komplexen, zur Schaffung von gleichartigen Viehgruppen nach ihrer Milchleistung, bei der Selektionsarbeit zur Feststellung der Brauchbarkeit der Kühe zur Maschinenmelken technologie sowie zur Zusammenstellung von begründeten Futterrationen für jedes Vieh je nach dessen Milchleistung und physiologischem Zustand sowie zur Durchführung von Abrechnungsoperationen zur Ermittlung der Ergebnisse der Produktion und zur Bewertung der Ergebnisse der zootechnischen, Veterinär- und Selektionsarbeit mit einer Milchviehherde muss man eine genaue, sichere und objektive Information über die Milcherträge jeder Kuh und über das Leistungsniveau einzelner Teile des Euters zur Verfügung haben. Das Vorhandensein einer genauen Information über die gemolkene Milchmenge bietet die Möglichkeit, nicht nur optimale Rückschlüsse zur Steuerung des Ablaufs der Milchproduktion in den Milchviehfarmen herzustellen, sondern auch frühere, subklinische Erkrankungsformen einzelner Viertel des Euters zu entdecken. Dies gestattet es seinerseits, den Gesundheitszustand der Kühe rechtzeitig zu kontrollieren und vermeidet, daß von erkrankten Kühen gemolkene Milch in die Sammelmilch bei Verwendung vonindustriellen Melkanlagen gelangt. Dies trägt dazu bei, dass Verluste verringert werden, welche durch Beeinträchtigung der Milchqualität und durch Ausmusterung von Kühen nach dem Gesundheitszustand auftreten.

Außerdem steht die Grösse der individuellen Milcherträge mit vielen anderen, besonders wichtigen Funktionen sowohl der Milchproduktion als auch der Viehherdereproduktion in Beziehung. So können auf die Milchleistung bezogene Abweichungen, welche in einem bestimmten Stadium des Brunstzyklus der Kühe genau festgestellt sind, als einer der Überwachungsparameter für den Zeitpunkt dienen, zu den der Ausfluss während der Brunst bei Tieren eintreten soll.

Die Notwendigkeit einer täglichen Erfassung von Informationen über die Milcherträge eines jeden Viehs erfordert einen hohen Arbeitsaufwand und eine Verarbeitung einer beträchtlichen Informationsmenge, weshalb das Problem, die Milcherfassung zu automatisieren, aktuell ist.

Als akutes Problem ist ebenfalls die Berücksichtigung der Eigenschaften eines zu messenden Mediums bei der Bestimmung der zu melkenden Milchmenge sowie der Besonderheiten der Bauart und der Betriebsbedingungen der Milchzähler festzustellen.

Zwischen dem physikalischen Modell des Messvorganges bei der Messung von einzelnen Milchdosen und dem mathematischen Modell besteht eine Abweichung, die im Unterschied zwischen realen und idealen Bedingungen des Messvorgangs bei der Messung von Milcherträgen begründet ist. Dies bedingt einen erheblichen Messfehler bei der Ermittlung der gemolkenen Milchmenge bei einer Kuh. Durch die bekannten Anordnungen wird dieses Problem nicht gelöst, weil sie eine geringere Genauigkeit, Effektivität bei der Steuerung der Vorgänge der Produktion, Reproduktion und Selektion in den Milchfarmen besitzen.

Es ist ein Milchzähler von Massen- oder Volumentyp bekannt, der über einen Eintritts- und einen Austrittsstutzen mit dem Melkapparat der Melkanlage und mit deren Milchleitung verbunden ist und in dessen Innerem ein dosierendes Fühlelement Platz findet, das entweder als Drehtrommel (SU,A,886855) oder als Rinne (SU,A,1020090,SU,A,1297771) mit einer Mess- und einer Ausgleichskammer und mit einem daran befestigten Magneten ausgebildet ist, der mit einem Former einzelner Milchdosen zusammenwirkt. Die genannten Zähler zeichnen sich durch eine niedrige Messgenauigkeit aus, weil sie nur ein Korrekturglied enthalten, welches als Ausgleichskammer ausgebildet ist. Die Eichung der Rinne (SU,A,1297771) des Milchzählers mit Hilfe eines Gegengewichtes, nämlich durch Änderung der Masse desselben, bereitet aber Unbequemlichkeiten bei der Einstellung des Milchzählers und begrenzt dessen Genauigkeit wegen einer nur diskret wählbaren konkreten Korrekturmasse, weil der Istwert des Korrekturfaktors beliebige andere Zwischenwerte annehmen kann, die beliebig klein oder gross sein können, aber von der gewählten Masse des Gegengewichtes des Milchzählers verschieden sind.

Ausserdem wird bei den genannten Zählern keine Rücksicht auf die Milcheigenschaften, Besonderheiten der Bauart eines konkreten Milchzählertyps und auf die Betriebsbedingungen desselben in den Milchfarmen genommen, was deren Genauigkeit senkt.

Die erwähnten Milchzähler erlauben es nicht, den Melkvorgang der Kühe zu überwachen, weil bei ihnen keine Überwachung der Anfangs- und Endphase des Melkens vorgesehen ist sowie die Gesamtzeit nicht berücksichtigt wird, die der Bediener für das Melken der Kuh oder eines Viertels deren Euters in Anspruch nimmt. Dies macht die Arbeit mit der Herde kompliziert und führt zur Erkrankung der Kühe und zu einer Senkung deren Milchleistung infolge ungünstiger Melkbedingungen und mangels einer gewünschten Überwachung des Melkablaufs.

Die bekannten Milchzähler sorgen für keine Verarbeitung von Informationen über die Milchleistung jedes Tiers oder der Euterteile desselben, was die Einstellung der Zähler auf optimale Dosen erschwert. Es ist ein Milchzähler mit statischer Korrektur bei der Bestimmung der Milchmenge (SU,A,1175403) bekannt, welcher eine Zweikammer-Rinne mit zwei Ausgleichskammern und einem Dauermagneten enthält, der mit einem Former einzelner Milchdosen in Wechselwirkung tritt, der mit den Eingängen der Bedientafel einer Recheneinrichtung verbunden ist.

Der bekannte Milchzähler ist nur für separate Systeme zum Melken und Transport von Milch über Rohrleitungen bestimmt und für herkömmliche Melkanlagen nicht geeignet.

Der Zähler hat die Möglichkeit, in die Recheneinrichtung nur einen Faktor statischer Korrektur einzugeben, welcher einer unveränderlichen Milchdurchflussmenge in der Milchleitung entspricht.

Daneben ist die tatsächliche Milchabgabe eine variable Größe, so dass zusätzliche Bauelemente in der Konstruktion erforderlich sind, welche es ermöglichen, einen breiten Satz an Korrekturfaktoren einzuführen, die einem tatsächlichen Wert der Milchmasse einer einzelnen Dosis in der Rinne entsprechen. Derartige Bauelemente sind im bekannten Zähler nicht vorhanden. Darüber hinaus gewährleistet der Zähler keine Überwachung des Prozessablaufs der Milchabgabe jedes Viehs oder Viertels seines Euters, weshalb er für die Selektions- und Veterinärarbeit mit der Herde nicht geeignet ist.

Es ist ein automatischer Milchzähler eines Melkapparates bekannt, von dem im Oberbegriff des Anspruchs 1 ausgegangen wird, welcher mit einer Zahl- und Dosiervorrichtung versehen ist, die für jedes Viertel des Euters eines Viehs eine Auffangkammer für einen ununterbrochenen Milchstrom mit einem vertikal angeordneten Luftableitungsrohr und einer Abflussöffnung aufweist, unter der ein diskreter Dosierer der Milch angeordnet ist, der mit einem Former zur Erzeugung von elektrischen Signalen verbunden ist, die den dosierten Milchdosen entsprechen, und einen Registrierteil für die Parameter der Milchabgabe jedes Viertels des Euters hat, der einen Milchertragsgeber und einen Zeitgeber enthält (s. 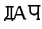 -1, Technische Beschreibung und Betriebsanleitung 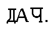 .00.000. T0. Rezeknensky zavod doilhykh ustanovok, 1984, S.9).

Bei dieser Zähleranordnung werden die Milchdosen aus einem ununterbrochenen Strom beim Melken der einzelnen Viertel des Euters durch einen Dosierer vom Rinnentyp gebildet, wobei der Rauminhalt (Volumen) einer Kammer des letzteren gemäss dem berechneten mathematischen Modell ca. 50 Gramm beträgt. Deshalb wird bei Drehung der Rinne unter der Wirkung einer darauf gelangenden Milchdosis vorgegebener Masse durch den Former eine Anzahl von Milchdosen gezählt, indem die tatsächliche Masse dieser Milchdosis nicht berücksichtigt wird, welche von der berechneten verschieden ist, weil das physikalische Modell des Messvorganges von dem mathematischen Modell infolge bei der Messung der einzelnen Milchdosen auftretender Messfehler abweicht, welche durch die Milcheigenschaften, die konstruktiven Besonderheiten und die besonderen Betriebsbedingungen des Milchzählers bedingt sind.

Unter den realen Betriebsbedingungen dieses Zählers entstehen daher zusätzliche Messfehler, die nicht mit berücksichtigt werden, was die Messgenauigkeit sowohl des Milchertrags von jedem Viertel des Euters als auch der gesamten Milchleistung von jeder Kuh senkt.

Ausserdem erfolgt die Voreinstellung dieses Zählers unter Verwendung von destilliertem Wasser, obwohl sich dessen Eigenschaften von denen der kuhwarmen Milch unterscheiden, wodurch ein Fehler bei der Messung einzelner Milchdosen auftritt.

Da keine Rücksicht auf einen Unterschied zwischen dem Arbeitsvakuum und der Vakuumhöhe genommen wird, bei der die Voreinstellung des genannten Zählers erfolgt, tritt beim Betrieb des Zählers unter realen Bedingungen ein zusätzlicher Fehler auf, der dadurch hervorgerufen ist, dass der Dosierer unter der Wirkung eines zusätzlichen Vakuums früher anspricht, bevor die Messkammer der Rinne des Dosierers völlig gefüllt ist.

Daneben entstehen beim Melken der Kuh in der Milch Gas- und Luftkomponenten infolge der Einwirkung des Melkvakuums auf die Milch, weswegen die Messkammer des Dosierers nicht völlig aufgefüllt wird. Dadurch ergibt sich auch ein zusätzlicher Fehler in den Anzeigen.

Zu den zusätzlichen Fehlern dieses Milchzählers gehören solche, die durch eine ungenaue Fertigung des Behälters der Rinne des Dosierers, eine Reibung in den Lagerungen der Rinnenachse, durch die Ungenauigkeit der ursprünglichen Voreinstellung des Dosierers auf die Masse einer einzelnen Milchdosis und viele andere Faktoren bedingt sind, wodurch sich keine optimale Masse in jeder Dosis ergibt.

Aus der metrologischen Sicht zeichnet sich der Messvorgang bei der Ermittlung der einzelnen Milchdosen durch diese Zähleranordnung mit einer geringen Güte aus, weil keine Rechen- und metrologische Basis zur Prüfung und Verarbeitung der Messergebnisse zur Verfühung steht, wobei sich ohne statistische und metrologische Auswertung der letzteren eine niedrigere Sicherheit der Messergebnisse bei der Messung des Milchertrags der Viertel des Euters ergibt. Hinzu kommt, dass der bekannte Zähler keine Verarbeitung der gewonnenen Messergebnisse gewährleistet.

Beim Betrieb dieser Zähleranordnung registriert man die Melkzeit beim Melken der einzelnen Viertel von Hand, was die Sicherheit und Genauigkeit der Messung der Melkseit senkt. Hierbei ist der Vorgang der Registrierung der Anfangs- und Endzeitpunkte der Milchabgabe nicht adäquat mit den Zeitpunkten derjenigen Milchabgabe vom Tier, die durch dessen Reflex bedingt ist, weil bei der Realisierung des Milchabgabee Reflexes Hemmungsreaktionen möglich sind, durch die die Milchabgabe zeitweilig unterbrochen wird, sowie wiederholte Milchflüsse im endgültigen Stadium des Melkens ebenfalls möglich sind, was bei der zuletzt behandelten Zähleranordnung nicht berücksichtigt wird, weil die Registrierung der Melkzeit mit dem Vorgang der Milchabgabe in keinem unmittelbaren Zusammenhang steht.

Die schaltungsmässige Lösung der Milchertragsgeber zur Erfassung des Milchertrags von jedem Viertel des Euters und der Melkzeitgeber ist bei dieser Zähleranordnung kompliziert und betriebsunsicher:
Somit ist die Verwendung dieser Milchzähleranordnung bei der zootechnischen, Veterinär- und Selektrionsarbeit nicht effektiv und im Betrieb kompliziert.

### Offenbarung der Erfindung

Der Erfindung liegt die Aufgabe zugrunde, einen solchen automatischen Milchzähler eines Melkapparates zu entwickeln, dessen schaltungsmässige und bauliche Ausführung eine genaue und adäquate Überwachung des Vorganges der Milchabgabe bei Tieren durch Sicherung der Übereinstimmung des physikalischen und des mathematischen Modells des Vorganges der Milchabgabe und durch Messung der einzelnen Milchdosen gewährleistet und infolge einer solchen Nichtübereinstimmung auftretende Messfehler durch Einführung von Korrekturfaktoren in den Messvorgang des Milchertrags für jedes Viertels des Euters beseitigt, wobei die Besonderheiten der Bauart und Betriebsart des automatischen Milchzählers eines Melkapparates berücksichtigt werden und eine genaue und sichere zootechnische Selektions- und Veterinärkontrolle jedes Viehs sicher gestellt ist, um die Milcherträge zu erhöhen.

Die gestellte Aufgabe wird dadurch gelöst, dass der automatische Milchzähler eines Melkapparates mit einer Zähl- und Dosiervorrichtung, die für jedes Viertel des Euters eines Viehs eine Auffangkammer für einen ununterbrochenen Milchstrom aufweist, in der ein Luftableitungsrohr vertikal angeordnet und eine Abflussöffnung vorgesehen ist, unter der ein Dosierer Platz findet, der mit einem Former zur Erzeugung von elektrischen Signalen verbunden ist, die den dosierten Milchdosen entsprechen, und mit einem Registrierteil für die Parameter der Milchabgabe des Viehs, der für jedes Viertel des Vieheuters einen Melkzeit- und einen Milchertragsgeber enthält, mit dem der diesem zugeordnete Former zur Erzeugung von elektrischen Signalen, die den dosierten Milchdosen entsprechen, verbunden ist, erfindungsgemäss mit einer Programmiereinheit versehen ist, wobei jeder Milchertragsgeber für jedes Viertel des Vieheuters als Mikroprozessoreinrichtung mit Anschlussenden für deren individuellen Anschluss an die Programmiereinheit ausgebildet ist, und der Melkzeitgeber für jedes Viertel des Vieheuters mit einem Fühlelement für den Anfang und das Ende der Messung der Melkzeit ausgestattet ist, und jede Auffangkammer für einen ununterbrochenen Milchstrom mit einem Anfangs- und Endzeitpunktgeber für die Milchabgabe jedes Viertels des Vieheuters bestückt ist, welcher als Schwimmer mit einem Magneten ausgebildet ist, der längs des Luftableitungsrohrs auf und abbewegbar im Maße der Auffüllung der Auffangkammer angeordnet ist, deren Abflussöffnung einen Querschnitt aufweist, der einer Soll-Milchdurchflussmenge zu den Anfangs- und Endzeitpunkten der Milchabgabe jedes Viertels des Vieheuters entspricht, wenn das Fühlelement des Melkzeitgebers für jedes Viertel des Vieheuters mit den Magneten des Anfangs- und Endzeitpunktgebers für die Milchabgabe jedes Viertels des Vieheuters zusammenwirkt.

Zur Registrierung der Melkdauer jedes Viertels des Vieheuters entsprechend der Zeit der realen Milchabgabe ist es vorteilhaft, dass jeder Melkzeitgeber für jedes Viertel des Vieheuters als Mikroprozessoreinrichtung ausgebildet ist.

Um eine zuverlässige Funktion jedes Anfangs- und Endzeitpunktgebers für jedes Viertel des Vieheuters zu sichern, erweist es sich als vorteilhaft, dass sein Schwimmer als Ring mit einem Führungsschlitz an seiner Innenfläche ausgebildet und an dem Luftableitungsrohr angebracht ist, das einen Vorsprung hat, der mit dem Führungsschlitz des Schwimmers zusammenwirkt.

Diese Ausführung des zu patentierenden Milchzählers eines Melkapparates sichert eine hohe Genauigkeit bei der Messung der bei einer Kuh gemolkenen Milchmenge sowie des Milchertrags von den einzelnen Vierteln des Vieheuters. Ausserdem wird durch Einführung der Bauelemente zur genauen und adäquaten automatischen Überwachung des Ablaufes der Milchabgabe von jedem Viertel des Vieheuters der Melkvorgang verbessert und die Möglichkeit geboten, den Gesundheitszustand des Viehs (der Kuh) und den Euterzustand zu überwachen. Dadurch steigert der zu patentierende Milchzähler die Effektivität und Genauigkeit der Durchführung der zootechnischen, Veterinär- und Selektionsarbeit mit der Herde und trägt zu einer Erhöhung von Milcherträgen und -qualität bei.

Nachstehend wird die Erfindung an Hand einer konkreten Ausführungsform unter Bezugnahme auf die Zeichnungen näher erläutert. Es zeigt
Fig. 1 - eine Gesamtansicht eines Melkapparates mit einem erfindungsgemässen Milchzähler in der Arbeitslage;
Fig. 2 - eine Gesamtansicht einer Zähl- und Dosiervorrichtung des automatischen Milchzählers des Melkapparates (Draufsicht) gemäss der Erfindung;
Fig. 3 - ein Struktur- und Funktionsschaltbild des erfindungsgemässen automatischen Milchzählers des Melkapparates;
Fig. 4 - eine schematische Darstellung des Aufbaus und der Prinzipschaltung eines der vier Module des erfindungsgemässen automatischen Milchzählers des Melkapparates und der Programmiereinheit in der Arbeitslage;
Fig. 5 - eine Prinzipschaltung eines Melkzeitgebers für jedes Viertel des Vieheuters gemäss der Erfindung;
Fig. 6 - eine Ausführungsvariante des Schwimmers des Anfangs- und Endzeitpunktgebers für jedes Viertel des Vieheuters gemäss der Erfindung;
Fig. 7 - ein Anordnungsschema der erfindungsgemässen automatischen Milchzähler des Melkapparates in einer Melkanlage vom Typ "Tannenbaum".

### Ausführungsform der Erfindung

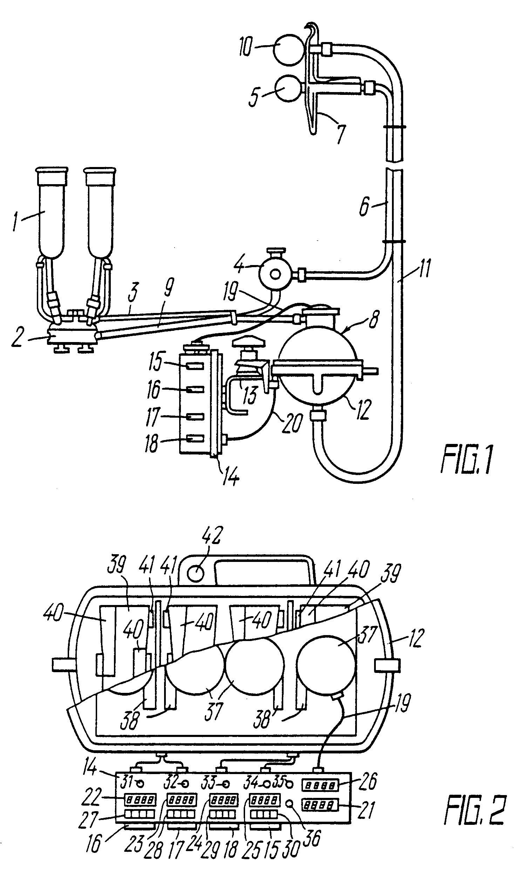

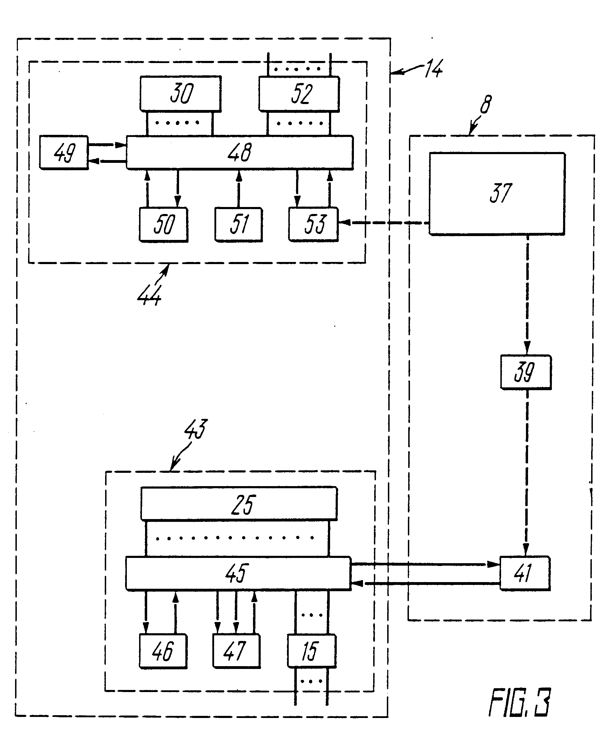

Der erfindungsgemässe automatische Milchzähler eines Melkapparates 1 (Fig. 1), der einen Sammler 2 hat, der mittels Schläuchen 3 an einen Pulsator 4 geschaltet ist, der mit einer Vakuumleitung 5 der Melkanlage über einen Schlauch 6 und einen Milch-Vakuumhahn 7 in Verbindung steht, enthält eine Zähl- und Dosiervorrichtung 8, die mit dem Sammler 2 mittels Schläuchen 9 und mit einer vakuumierten Milchleitung 10 der Melkanlage über einen Schlauch 11 und den Milch-Vakuumhahn 7 verbunden ist. Am Gehäuse 12 der Zähl- und Dosiervorrichtung 8 ist mit Hilfe eines Halters 13 ein Registrierteil 14 für die Parameter der Milchabgabe eines Viehs befestigt, welcher mit Leitungssteckern 15, 16, 17, 18 und Stromzuleitungen 19,20 versehen ist. An der Tafel des Registrierteils 14 (Fig. 2) sind ein Digitalanzeiger 21 für die von jeder Kuh gemolkene gesamte Milchmenge, Digitalanzeiger 22, 23, 24, 25 für den Milchertrag von dem betreffenden Viertel des Vieheuters sowie ein Digitalanzeiger 26 für die gesamte Melkzeit jeder Kuh und Digitalanzeiger 27, 28, 29, 30 für die Melkzeit jedes Viertels des Vieheuters eingebaut. Zur Löschung von Anzeigewerten der Digitalanzeiger 21 bis 30 dienen jeweilige Knöpfe 31 bis 36.

Die Zähl- und Dosiervorrichtung 8 (Fig. 1) enthält vier identische Auffangkammern. 37 (Fig. 2) für einen ununterbrochenen Milchstrom, deren jede dem jeweiligen Viertel des Vieheuters zugeordnet wird und die Schläuche 38 für die Milchförderung von jedem Euter haben, vier Dosierer 39 mit hydraulischen Ausgleichskammern 40 in jedem von ihnen und vier Former 41 zur Erzeugung von elektrischen Signalen, die den dosierten Milchdosen entsprechen, wobei jeder Former mit einem ihm zugehörigen Dosierer 39 verbunden ist, zu deren horizontaler Anordnung vor Melkbeginn eine Libelle 42 dient.

Der Registrierteil 14 (Fig. 1) für die Parameter der Milchabgabe eines Viehs enthält für jedes Viertel des Kuheuters einem Milchertragsgeber43 und einen Melkzeitgeber 44.

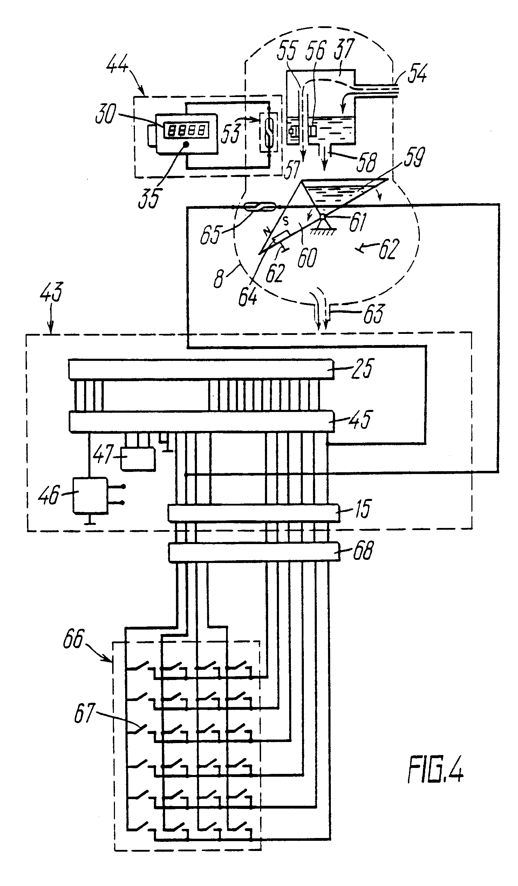

Der Geber 43 ist als Mikroprozessoreinrichtung ausgebildet, die einen Mikroprozessor 45, der mit einer Stromversorgungsquelle 46 verbunden ist und eine Stufe 47 zur Nachregelung der Frequenz eines Taktgenerators enthält. Ausserdem ist der Mikroprozessor 45 an den Digitalanzeiger 25, den Leitungsstecker 15 und den Former 41 angeschlossen. Der Geber 44 ist als Mikroprozessoreinrichtung ausgebildet, die einen mit einer Stromversorgungsquelle 49 verbundenen Mikroprozessor 48, eine Stufe 50 zur Nachstellung und Stabilisierung der Bezugsfrequenz und eine Einheit 51 zur akustischen Signalisierung über das eintretende Endstadium des Melkens enthält, die an die jeweiligen Eingänge und Ausgänge des Mikroprozessors 48 geschaltet ist. Darüber hinaus ist der Mikroprozessor 48 an den Digitalanzeiger 30 angeschlossen und weist einen Leitungssteckerverbinder 52 auf. Der Geber 44 ist mit einem Fühlelement 53 (Fig. 3, 4) versehen, das als Herkonelement ausgebildet ist, das in unmittelbarer Nähe der Auffangkammer 37 für ununterbrochenen Milchstrom eingebaut ist.

Jede Kammer 37 (Fig. 4) weist einen Milchförderungsstutzen 54, der mit einem zugehörigen Schlauch verbunden ist, und ein in der Kammer vertikal angeordnetes Luftableitungsrohr 55 auf und ist mit einem Anfangs- und Endzeitpunktgeber für die Milchabgabe jedes Viertels des Vieheuters versehen, der als Schwimmer 56 mit einem Magneten 57 ausgebildet ist, welcher längs des Luftableitungsrohrs 55 auf- und abbewegbar angeordnet ist. Der Boden der Kammer 37 weist eine Abflussöffnung 58 auf, die ungefähr für die Grösse der Milchdurchflussmenge von 200 g/min kalibriert ist und unter der Rinne des Dosierers 39 (Fig. 2) angeordnet ist, die zwei Kammern 59 und 60 hat und um die Achse 61 drehbar angeordnet ist, wobei die Drehung der Rinne durch Anschläge 62 begrenzt ist. Der Milchabfluss erfolgt durch einen Stutzen 63.

Jeder Former 41 (Fig. 1) ist aus einem in der Kammer 60 untergebrachten Magneten 64 und einem Herkonelement 65 aufgebaut, das in unmittelbarer Nähe der Kammer 60 angebracht ist und dessen Kontakte an den Mikroprozessor45 des Milchertragsgebers 43 für jedes Viertel des Vieheuters angeschlossen sind.

Der automatische Milchzähler eines Melkapparates ist erfindungsgemäss mit einer Programmiereinheit 66 ausgestattet, die als lösbare kompakte Einheit von Kontaktmatrizen 67 vom Tastentyp ausgebildet ist, welche einen Leitungssteckverbinder 68 aufweist, mit dessen Hilfe die Programmiereinheit an einen der Leitungssteckverbinder 15, 16, 17, 18 (Fig. 1) der Reihe nach anschliessbar ist.

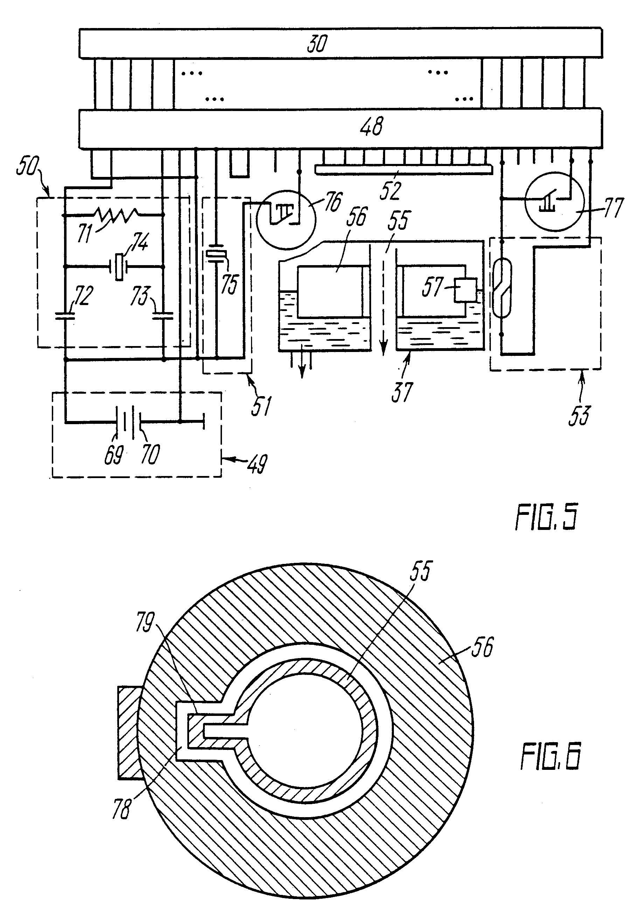

In Fig. 5 ist eine Prinzipschaltung des Melkzeitgebers 44 für jedes Viertel des Vieheuters gezeigt, welcher als Mikroprozessoreinrichtung ausgebildet ist. Die Stromversorgungsquelle 49 des Mikroprozessors 48 besteht aus in Reihe geschalteten Akkumulatorbatterien 69, 70. Die Einheit 50 zur Nachstellung und Stabilisierung der Taktfrequenz ist aus einem Widerstand 71, Kondensatoren 72, 73 und einem Resonator 74 aufgebaut, welche mit den Bauelementen einer Taktgeneratorschaltung verbunden sind, die in den integrierten Schaltkreis des Mikroprozessors 48 unmittelbar eingebaut ist. Die Einheit 51 zur akustischen Signalisierung über das eintretende Endstadium des Melkens ist in Form eines Piezoelementes 75 ausgeführt, das an den Mikroprozessor 48 angeschlossen ist. Mit dem Piezoelement 75 ist ein Steuerknopf 76 verbunden, der an den Mikroprozessor 48 geschaltet und auf der Programmiereinheit 66 (Fig. 4) angeordnet ist. Zum manuellen Ein- und Ausschalten des Gebers 44 (Fig. 5) wird ein Knopf 77 benutzt, während zum Anschluss der Programmiereinheit 66 (Fig. 4) an den Mikroprozessor 48 (Fig. 5) der Leitungssteckverbinder 52 dient.

Für ein zuverlässiges Arbeiten des Anfangs- und Endzeitpunktgebers für die Milchabgabe jedes Viertels des Euters ist dessen Schwimmer 56 (Fig. 6) als Ring mit einem Führungsschlitz 78 an seiner Innenfläche ausgebildet, wobei das Luftableitungsrohr 55 einen Vorsprung 79 hat, der mit dem Führungsschlitz 78 des Schwimmers 56 zusammenwirkt.

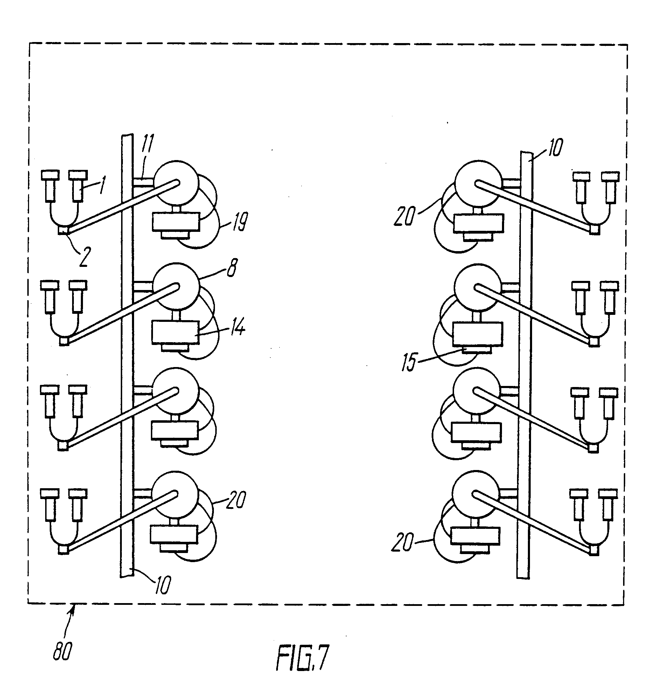

Bei der gleichzeitigen Bedienung mehrerer Tiere an einer Melkanlage 80 (Fig. 7) vom Typ "Tannenbaum" unter Verwendung einer gewünschten Anzahl der erfindungsgemässen automatischen Milchzähler ist die Anwendung einer einzigen Programmiereinheit 66 möglich, die der Reihe nach an den Registrierteil 14 (Fig. 1) für die Parameter der Milchabgabe eines Tiers angeschlossen wird.

Die Wirkungsweise des erfindungsgemässen Milchzählers eines Melkapparates besteht im folgenden.

Vor Beginn der Arbeit schaltet man die autonomen Stromversorgungsquellen 46, 49 (Fig. 3) des Milchertragsgebers 43 und des Melkzeitgebers 44 ein, schliesst die Programmiereinheit 66 (Fig. 4) über den Leitungssteckverbinder 68 an die jeweiligen Leitungssteckverbinder 15, 16, 17, 18 (Fig. 1) der Reihe nach an und nimmt eine Vorkalibrierung jedes der Dosierer 39 (Fig. 2) unter Verwendung von zur Verfügung stehenden Korrekturprogrammen und -algorithmen vor, die die Milcheigenschaften, die Besonderheiten des Aufbaus der Dosierer 39 und die besonderen Betriebsbedingungen bei realer Nachbildung des Melkvorganges unter Verwendung der kuhwarmen Milch einer Kuh berücksichtigen. Dies bietet die Möglichkeit, unter Einbeziehung eines Korrekturfaktors das physikalische und das mathematische Modell des Messvorganges bei der Messung von Milchdosen in Übereinstimmung zu bringen, ohne dass dabei der Aufbau der Dosierer geändert und optimiert sowie Änderungen in den Betriebsbedingungen und -arten des automatischen Milchzählers des Melkapparates vorgenommen und die Former 41 elektrischer Signale, die den dosierten Milchportionen entsprechen, auf einen optimalen Vakuumzustand zusätzlich eingestellt werden müssen.

Nachdem die Operation der digitalen Modellierung einer optimalen Masse für eine diskrete Dosis eines der Dosierer 39 unter Berücksichtigung der Milcheigenschaften, der Besonderheiten dessen Aufbaus und des Betriebs abgeschlossen worden ist, wird der mit Hilfe des Mikroprozessors 45 (Fig. 3) errechnete, in Digitalform dargestellte Wert der optimalen Masse einer diskreten Milchdosis, die z.B. für diesen Dosierer 39 gleich 0,48756 kg ist, in den Speicher des Mikroprozessors 45 (Fig. 3) des Gebers 43 durch Handschliessen der Kontakte der entsprechenden Matrizen 67 (Fig. 4) eingegeben. Dabei wird der Wert 0,48756 kg am zu diesem Dosierer 39 gehörigen Digitalanzeiger 25 (Fig. 2) abgebildet. Für die anderen Dosierer 39 kann der digitale Wert der optimalen Masse der diskreten Milchdosis von 0,48756 kg verschieden sein. Nach Eingabe der entsprechenden digitalen Werte der optimalen Masse diskreter Milchdosen in die Digitalanzeiger 22, 23, 24, 25 geht man zur Programmierung einer Betriebsart des Mikroprozessors 48 (Fig. 3), der zum Melkzeitgeber 44 für jedes Viertel des Vieheuters gehört, unter Verwendung der Programmiereinheit 66 (Fig. 4) über. Dazu stellt man mit Hilfe des Knopfes 76 (Fig. 5) an der Einheit 51 zur akustischen Signalisierung eine Sollzeit ein, die der für den Abschluss des Melkens benötigten Zeit entspricht, sich nach vorläufigen Daten ermittelt und z.B. gleich 4¹/4 min ist. Das ist erforderlich, damit der Melkmaschinenbediener bei gleichzeitiger Arbeit mit mehreren Melkapparaten (Fig. 1,7) optimale Wege zum Übergang von einem Melkapparat 1 zu einem anderen wählt und unter Erkennung des Signals der Einheit 51, welches dem Endstadium des Melkens entspricht, kein zu langes Halten der Melkbecher an den Zitzen des Euters der Kuh zulässt. Dadurch wird die völlige und reine Ausmelkung der Kühe gewährleistet und ein für deren Gesundheit schädliches "trockenes" Melken vermieden, was im ganzen eine vollständigere Ausnutzung des genetischen Potentials jedes Tiers in Hinsicht auf die Leistung ermöglicht und zu einer Erhöhung der Milcherträge beiträgt.

Nachdem die Operationen der Vorprogrammierung des Milchertragsgebers 43 und des Melkzeitgebers 44 (Fig. 3) für jedes Viertel des Vieheuters abgeschlossen sind, schaltet man den Melkapparat 1 (Fig. 1) über den MilchVakuumhahn 7 an die Vakuumleitung und an die vakuumierte Milchleitung 10 der Melkanlage an und schliesst den Melkapparat 1 an das Euter des Viehs an. Es wird mit dem Melken der einzelnen Viertel des Euters begonnen. Die Milch jedes Viertels des Euters gelangt vom Melkapparat 1 über den Sammler 2, den Schlauch 9 und den Stutzen 54 (Fig. 4) zu einer der Milchauffangkammern. Dabei wird die Gas-Luft-Mischkomponente über das Luftableitungsrohr 55 abgeführt, und die Milch strömt in Form von pulsierenden Portionen in den unteren Teil der Kammer 37. Durch die Kalibrierung der am Boden der Kammer 37 vorgesehenen Öffnung 57 auf eine vorgegebene Durchflussmenge, die dem Anfangs- und Endstadium der Melkabgabe der Viertel des Vieheuters entspricht, z.B. für eine Durchflussmenge, die gleich 200 g/min ist, wird bei einer allmählichen Realisierung des Milchabgabe-Reflexes die Milch im Anfangsstadium des Melkens in der Kammer allmählich gesammelt, und die zunehmende Spiegelhöhe der Milch bewirkt ein allmähliches Heben des Schwimmers 56 mit dem Magneten 57 längs des Rohres 55. Der Schwimmer 56 erreicht die Höhe des Herkons des Fühlelementes 53, wobei auf den Herkon durch das magnetische Feld des Magneten 57 eingewirkt wird. Die Kontakte des Herkons des Fühlelementes 53 werden geschlossen, dabei trifft am entsprechenden Eingang des Mikroprozessors 48 (Fig. 4) des Gebers 44 ein elektrisches Signal ein. Von diesem Augenblick an setzt das Zählen der laufenden Melkzeit für das betreffende Viertel des Vieheuters ein, welche am Digitalanzeiger 30 (Fig. 2) angezeigt wird.

Zu dieser Zeit fliesst ein Teil der Milch von der Kammer 37 ununterbrochen durch die Öffnung 58 in eine der Kammern, z.B. in die Kammer 59 ab. Sobald die Masse der Milch einen bestimmten Wert erreicht, der einem digitalen Sollwert der optimalen Masse der diskreten Milchdosis entspricht, der am Digitalindikator 25 abgebildet wird (Fig.2), wird durch Verschiebung des Schwerpunktes der Rinne diese um ihre Achse 61 geschwenkt und erreicht einen der Anschläge 62 ( Fig. 4). Im Augenblick der Schwenkung der Rinne wirkt der Magnet 64 des Formers 41 (Fig. 2) aufgrund seiner Bewegung zusammen mit der Kammer 60 (Fig. 4) mit seinem magnetischen Feld auf den Herkon 65 ein, wodurch die Kontakte des Herkons geschlossen werden. Damit wird an den jeweiligen Eingang des Mikroprozessors 45 des Gebers 43 (Fig. 3) ein elektrisches Signal angelegt. Darauf wird mit der Füllung der Kammer 60 (Fig. 4) mit Milch begonnen, und des nächste elektrische Signal, welches am Eingang des Mikroprozessors 45 ankommt, wird ähnlich wie oben beschrieben formiert. Der Mikroprozessor 45 addiert die elektrischen Signale, die an seinen Eingang vom Herkon 65 aufeinanderfolgend angelegt werden, wobei ein digitaler Wert, welcher der Anzahl dieser Signale und folglich der Anzahl der Milchdosen von einem der Viertel des Vieheuters entspricht, am Anzeigeindikator 25 angezeigt wird.

In dem Maße, wie man sich dem Endstadium des Melkens nähert, gibt die Einheit 51 (Fig. 5) ein akustisches Signal ab. Dabei nimmt der Maschinenmelker ein manuelles Nachmelken des Euters des Viehs derart vor, dass darin keine Milch bleibt. Dies ist notwendig sowohl für die Erhaltung der Gesundheit der Kühe als auch für die Gewinnung von fetteren Milchresten.

Am Melkende gelangt keine weitere Milch in die Kammer 37 (Fig. 4), wobei der Flüssigkeitsspiegel der Milch sinkt und ein Moment eintritt, bei dem der Schwimmer 56 mit dem Magneten 57 eine Position erreicht, die der Höhenlage des Herkons des Fühlelementes 53 des Melkzeitgebers 44 (Fig. 3) entspricht. In diesem Fall wird an den jeweiligen Eingang des Mikroprozessors 48 ein elektrisches Signal angelegt. Ändert der Schwimmer 56 (Fig. 4) nach Ablauf einer vorgegebenen Zeit von z.B. 20 bis 25 Sekunden seine Stellung nicht und bleiben die Kontakte des Herkons geschlossen, dann wird im Mikroprozessor 48 (Fig. 3) ein Steuerimpuls erzeugt, der den Abbruch des Zählens der Milchabgabezeit bewirkt, so dass ein Endzeitpunkt des Melkens festgesetzt wird, wobei der Digitalanzeiger 30 eine reale Zeit für das Melken eines Viertels des Vieheuters angibt. Somit ist die Zeitverzögerung, die für die Erzeugung des genannten Steuersignals durch den Mikroprozessor 48 benötigt wird, zur Berücksichtigung von Milchflüssen, die am Melkende möglich sind, und zur genauen Fixierung des Endzeitpunktes des Melkens erforderlich. Dabei wird die Verzögerungszeit mit Rücksicht auf eine reale Zeit gewählt, während der das Auftreten solcher Milchflüsse möglich ist. Ausserdem ist die Zeitverzögerung erforderlich, damit der unter dem Schwimmer 56 verbliebene Milchteil aus der Kammer 37 herausfliessen kann.

Gleichzeitig wird der Wert des Milchertrags von den Vierteln des Euters an den Digitalanzeigern 22, 23, 24, 25 (Fig. 2) und der Wert des gesamten gemolkenen Milchertrags am Anzeiger 21 automatisch dargestellt; die Melkzeit für jedes Viertel des Euters wird an den Anzeigern 27, 28, 29, 30 und die gesamte Melkzeit am Anzeiger 26 angezeigt. Nach der Aufzeichnung von Abrechnungsdaten auf einen Datenträger wird das Löschen der Anzeigewerte aller Anzeiger 21 bis 30 mittels der Knöpfe 31 bis 36 vorgenommen, und der obenbeschriebene Arbeitsvorgang des Zählers wird wiederholt.

Bei der Bedienung von Kühen auf den Melkanlagen 80 (Fig. 7) vom Typ "Tannenbaum" kann Zur Durchführung von zootechnischen oder Selektionsarbeiten zur Überwachung jedes Viehs, bei der eine grosse Anzahl von Zählern (8x4x32) erforderlich ist, eine einzige Programmiereinheit 66 (Fig. 4) für die ganze Melkanlage 80 verwendet werden, was die Bauart und die Bedienung der automatischen Zähler vereinfacht und die Kosten derselben senkt.

Durch Verwendung der lösbaren tragbaren Programmiereinheit 66 in den automatischen Milchzählern wird ausserdem ein unberechtigter Zugang zur Umprogrammierung des automatischen Milchzählers durch Unbefugte vermieden, wodurch die Möglichkeit ausgeschlossen wird, subjektive Fehler beim Programmieren einzugeben sowie die Anzeigen absichtlich oder zufällig durch interessierte oder zufällige Personen, die zum Bedienungspersonal der Farm gehören, zu fälschen.

Der erfindungsgemässe automatische Milchzähler eines Melkapparates zählt zu einer neuen Klasse von Milchzählern des "Intelligenztyps", deren Anwendung die Genauigkeit der ursprünglichen Angaben bzw. Daten zur effektiven Steuerung des Ablaufs der Milchproduktion und zur Herdenreproduktion verbessert, die Wirksamkeit von zootechnischen, Veterinär- und Selektionsarbeiten mit der Herde erhöht, wodurch die Milcherträge gesteigert werden. Ausserdem wird die Bauart und der Betrieb des Milchzählers des genannten Typs bei einer Erweiterung ihrer Funktionsmöglichkeiten vereinfacht. Dabei ist eine Zusammenarbeit der Zähler mit Mikrorechnern möglich.

### Gewerbliche Anwendbarkeit

Die Erfindung kann bei beliebigen bekannten Melkanlagen beim Melken einzelner Kühe sowohl in einem Melkraum als auch unmittelbar in Ställen, in denen die Tiere gehalten werden, zur Verwendung kommen.

## Patentansprüche

1. Automatischer Milchzähler eines Melkapparates mit Zähl- und Dosiervorrichtung, die für jedes Viertel des Euters eines Viehs eine Auffangkammer (37) für einen ununterbrochenen Milchstrom aufweist, in der ein Luftableitungsrohr (55) vertikal angeordnet und eine Abflussöffnung (58) vorgesehen ist, unter der ein Dosierer (39) Platz findet, der mit einem Former (41) zur Erzeugung von elektrischen Signalen verbunden ist, die den dosierten Milchdosen entsprechen, und mit einem Registrierteil (14) für die Parameter der Milchabgabe des Viehs, der für jedes Viertel des Vieheuters einen Melkzeitgeber (44) und einen Milchertragsgeber (43) enthält, mit dem der diesem zugeordnete Former (41) zur Erzeugung von elektrischen Signalen, die den dosierten Milchdosen entsprechen, verbunden ist, dadurch **gekennzeichnet,** dass er eine Programmiereinheit (66) aufweist und dass der Milchertragsgeber (43) für jedes Viertel des Vieheuters als Mikroprozessoreinrichtung mit Anschlussenden für deren individuellen Anschluss an die Programmiereinheit (66) ausgebildet ist, wobei der Melkzeitgeber (44) für jedes Viertel des Vieheuters mit einem Fühlelement (53) für den Anfang und das Ende der Messung der Melkzeit versehen ist, und, jede Auffangkammer (37) für einen ununterbrochenen Milchstrom mit einem Anfangs- und Endzeitpunktgeber für die Milchabgabe jedes Viertels des Vieheuters ausgestattet ist, welcher als Schwimmer (56) mit einem Magneten (57) ausgebildet ist, der längs des Luftableitungsrohrs (55) auf- und abbewegbar im Maße der Auffüllung der Auffangkammer (37) angeordnet ist, deren Abflussöffnung (58) einen Querschnitt aufweist, der einer Soll-Milchdurchflussmenge zu den Anfangs- und Endzeitpunkten der Milchabgabe jedes Viertels des Vieheuters entspricht, wenn das Fühlelement (53) des Melkzeitgebers (44) für jedes Viertel des Vieheuters mit dem Magneten (57) des Anfangs- und Endzeitpunktgebers für die Milchabgabe jedes Viertels des Vieheuters zusammenwirkt.

2. Automatischer Milchzähler eines Melkapparates nach Anspruch 1, dadurch **gekennzeichnet,** dass der Melkzeitgeber (44) für jedes Viertel des Vieheuters als Mikroprozessoreinrichtung ausgebildet ist.

3. Automatischer Milchzähler eines Melkapparates nach Anspruch 1 oder 2, dadurch **gekennzeichnet,** dass der Schwimmer (56) des Anfangs- und Endzeitpunktgebers für die Milchabgabe jedes Viertels des Vieheuters als Ring mit einem Führungsschlitz (78) an seiner Innenfläche ausgebildet und an dem Luftableitungsrohr (55) angebracht ist, das einen Vorsprung (79) hat, der mit dem Führungsschlitz (78) des Schwimmers (56) zusammenwirkt.

## Claims

1. Automatic milk counter of a milking unit, comprising a counting and metering device which has for each quarter of cow's udder a continuous milk flow receiving chamber (37) with a vertically disposed air drawoff pipe (55) and a drain hole (58) under which there is a proportioning unit (39) connected with means (41) for producing electrical signals which correspond to the metered portions of milk, and comprising a recording unit (14) for recording milk flow parameters which includes for each quarter of cow's udder a milking timer (44) and a milk yield sensor (43) connected with the respective means (41) for producing electrical signals which correspond to the metered portions of milk, characterized in that it comprises a programming unit (66) and in that the milk yield sensor (43) for each quarter of cow's udder is designed as a microprocessor device with terminals for its individual connection to the programming unit (66), the milking timer (44) for each quarter of cow's udder being provided with a sensing element (53) for the start and the end of measurement of the milking time, and each continuous milk flow receiving chamber (37) is equipped with a milk flow start and end sensor for each quarter of cow's udder, which is designed as a float (56) with a magnet (57) arranged in a manner allowing its upward and downward motion along the air drawoff pipe (55) in step with the filling of the receiving chamber (37), whose drain hole (58) has a cross-section corresponding to a predetermined milk flow rate at the milk flow start and end moments for each quarter of cow's udder, when the sensing element (53) of the milking timer (44) for each quarter of cow's udder interacts with the magnet (57) of the milk flow start and end sensor for each quarter of cow's udder.

2. Automatic milk counter of a milking unit according to Claim 1, characterized in that the milking timer (44) for each quarter of cow's udder is designed as a microprocessor device.

3. Automatic milk counter of a milking unit according to Claim 1 or 2, characterized in that the float (56) of the milk flow start and end sensor for each quarter of cow's udder is designed as a ring with a guide slot (78) of the internal surface thereof and is mounted on the air drawoff pipe (55) which has a projection (79) interacting with the guide slot (78) of the float (56).

## Revendications

1. Compteur automatique à lait pour installation de traite, qui comprend un dispositif de comptage et de dosage comprenant, pour chaque trayon du pis d'une vache, une chambre (37) de réception du flux continu de lait comportant un tube (55) d'échappement d'air monté verticalement dans cette chambre et un orifice de vidange (58) sous lequel est placé un doseur (39) relié à un générateur (41) de signaux électriques représentatifs des quantités dosées de lait et une entité (14) d'enregistrement des paramètres de rendement en lait de chacune des vaches enclenchant pour chaque trayon du pis de la vache un compteur de durée écoulée de traite (44) et un capteur de quantité de lait trait (43) auquel est relié son générateur particulier (41) de signaux électriques correspondant aux quantités dosées de lait, caractérisé en ce que ce compteur automatique comprend aussi une unité à programme (66) et en ce que le capteur de quantité de lait trait (43) à chaque trayon du pis d'une vache est réalisé sous la forme d'un dispositif à microprocesseur ayant des bornes servant à la connexion individuelle à l'unité à programme (66), en ce que le compteur de durée écoulée (44) de la traite à chaque trayon du pis d'une vache est doté d'un élément sensible (53) et chaque chambre (37) de réception du flux continu de lait est dotée d'un capteur du commencement et de la fin du débit de lait de chaque trayon du pis d'une vache, ce dernier capteur étant réalisé sous forme d'un flotteur (56) muni d'un aimant (57) qui peut monter et descendre le long du tube d'échappement d'air (55) en fonction du remplissage de la chambre (37) de réception dont l'orifice de vidange (58) a une section transversale correspondant à des débits de lait prédéterminés de consigne au moment du commencement et au moment de la fin du débit de lait de chaque trayon du pis d'une vache, moments, auxquels l'élément sensible (53) du compteur de durée écoulée (44) de chaque trayon du pis d'une vache coopère avec l'aimant (57) du capteur de commencement et de fin du débit de lait par chaque trayon du pis d'une vache.

2. Compteur automatique à lait pour installation de traite selon la revendication 1, caractérisé en ce que le compteur de durée écoulée (44) de débit par chaque trayon du pis d'une vache est réalisé sous la forme d'un dispositif à microprocesseur.

3. Compteur automatique à lait pour installation de traite selon la revendication 1, caractérisé en ce que le flotteur (56) du capteur du commencement et de la fin du débit de lait par chaque trayon du pis d'une vache est réalisé sous la forme d'une bague avec une rainure de guidage (78) pratiquée à sa surface intérieure et qui est montée sur le tube d'échappement d'air (55) qui possède une saillie (79) coopérant avec la rainure de guidage (78).
